# EUROPEAN PATENT SPECIFICATION

(11) **EP 2 408 857 B1**
(45) Date of publication and mention of the grant of the patent: **10.01.2018**
(21) Application number: 10710230.3
(22) Date of filing: 19.03.2010
(51) Int. Cl.: C08K 7/02, C09D 167/00, C08G 63/00

(54) **CELLULOSE MICROFIBRILS AS AIR RELEASE AGENT**
CELLULOSEMIKROFIBRILLEN ALS ANTISCHAUMMITTEL
MICROFIBRILLES DE CELLULOSE EN TANT QU'AGENT DE LIBÉRATION DE L'AIR

(30) Priority: 20.03.2009 EP 09004054; 20.03.2009 US 161934 P
(43) Date of publication of application: 25.01.2012
(73) Proprietor: Borregaard AS, 1721 Sarpsborg (NO)
(72) Inventor: HOLTAN, Synnove, 1721 Sarpsborg (NO); HANSEN, Michael, 1721 Sarpsborg (NO); OVREBO, Hans Henrik, 1721 Sarpsborg (NO)
(74) Representative: Ricker, Mathias
(86) International application number: PCT/EP2010/001749
(87) International publication number: WO 2010/105847

(56) References cited:
- WO-A-2005/056666
- DE-A1- 3 029 659
- FR-A- 2 867 193
- DATABASE WPI Week 200751 Thomson Scientific, London, GB; AN 2007-525740 XP002537353 & WO 2007/049666 A (HITACHI LTD) 3 May 2007 (2007-05-03)
- LU ET AL: "Surface modification of microfibrillated cellulose for epoxy composite applications" POLYMER, ELSEVIER SCIENCE PUBLISHERS B.V, GB, vol. 49, no. 5, 19 January 2008 (2008-01-19), pages 1285-1296, XP022488795 ISSN: 0032-3861
- DATABASE WPI Week 199720 Thomson Scientific, London, GB; AN 1997-218247 XP002537354 & JP 09 063560 A (SONY CORP) 7 March 1997 (1997-03-07)
- DATABASE WPI Week 200369 Thomson Scientific, London, GB; AN 2003-724596 XP002537355 & JP 2003 039411 A (MATSUSHITA ELECTRIC WORKS LTD) 13 February 2003 (2003-02-13)

## Description

The present invention relates to the use of microfibrillated cellulose (MFC) as an air release agent in viscous compositions that are subjected to at least one hardening step. The air release agent according to the invention is added prior or during the at least one hardening step.

The present invention also relates to a viscous composition at least comprising (i) at least one polymer material capable of being hardened in at least one hardening step and (ii) at least one microfibrillated cellulose.

The present disclosure relates to an article comprising a substrate and a hardened viscous composition wherein said hardened viscous composition comprises (i) at least one polymer material that has been hardened in at least one hardening step and (ii) at least one microfibrillated cellulose.

The area pore density at the surface of the composition that has been hardened is less than 100 pores/cm², preferably less than 10 pores/cm², further preferably less than 1 pore/cm².

### Background of the Invention

A common problem for viscous compositions that are subjected to a hardening step, in particular a drying and/or curing step is that once the viscous composition is applied, for example applied onto a substrate or surface, air may be entrapped inside the viscous composition (either occasioned by the application process or already being present from the onset). Based on the viscosity and retaining profile of the composition, the hardening, e.g. drying and/or curing may occur faster than the releasing of the entrapped air. This leads to generally unwanted bubbles or pores inside or on the surface of the hardened final composition as applied. This problem applies in particular for paints, polymer films, adhesives or gel coats as applied onto a substrate/surface.

Therefore, flow control is an issue and in particular slow diffusion of air out of the applied film/coating. Porosity in cured/dried viscous compositions as the result of air inclusions introduced during the application and/or spraying process, i.e. a certain level of porosity based on small air bubbles that are stabilized in the (wet) film and cannot diffuse out of composition before the film cures is a problem that may in fact be exacerbated by the presence of some thixotropic additives that are otherwise beneficial for the application process. In order to reduce the inclusion of air and, as a consequence, the formation of pores, in many cases, an air release additive must be added to the viscous composition to reduce pore formation, in particular to a composition that also comprises a thixotropic additive.

Any type of porosity in the final layer is undesired, since pores/bubbles tend to reduce the quality of the film (e.g. toughness, gloss, time stability, water resistance, weather (UV) resistance, etc.). The walls of these pores gradually break down from exposure to ozone and ultraviolet light. Micro-debris, pollution and grime also collect in the pores accelerating the oxidation process, eating away the coating from the inside. The occurrence of porosity in viscous compositions as applied to a substrate and as cured/dried represents a general problem in regard to applying said viscous compositions to substrates, adding significant cost in repairing and finishing work.

The use of some types of microfibrillated cellulose - with or without modifications - as a rheological additive in coatings or other viscous compositions is known in the art, for example from WO 02/18486 and EP 726 356. However, these applications are silent in regard to the problem of pore formation.

According to WO 02/18486, hydrophilic insoluble cellulose, in particular bacterial cellulose, can serve as a "rheological modifier" for water-immiscible liquids. The hydroxyl groups on the surface of the cellulose fibers can be stabilized in water-immiscible liquids by association with certain co-agents through hydrogen bonding. The resulting solutions have enhanced rheological properties, such as long term suspension stability of colloids and particles for an extended shelf-life, improved stability under a range of temperature conditions, highly pseudoplastic character under applied shear, improved efficacy at small concentrations and most significantly, functionality without the required presence of water or a hydrophilic liquid. In accordance with WO 02/18486, the rheologically improved composition comprises: (a) hydrophilic insoluble cellulose; and (b) a co-agent capable of forming hydrogen bonds with said hydrophilic insoluble cellulose, wherein said co-agent is soluble in a water-immiscible liquid and is used in industrial applications, including use in oil drilling fluids, paint solvents, solvent-borne or solvent-free epoxy systems, industrial lubricants and grease, thin film and powder coatings and vegetable oils.

According to EP 726 356, a novel microfibrillated cellulose and a process for its production from primary wall plant pulp, particularly from sugar beet pulp after extraction of saccharose are provided. The cellulose of EP 726 356 is a rheofluidifying and thixotropic substance having suitable physical and chemical properties in that the cellulose mainly consists of cellulose associated with a residual amount of pectins or hemicelluloses which procure particular physical and chemical properties, in particular a very high chemical reactivity, very large accessible surface area; excellent water retentive capacity; high suspending capacity; and thickening capacity.

FR 2 867 193 discloses coating, composite molding or mastic compositions that include surface-modified cellulose microfibrils that have a length/diameter ratio above 20 and an average diameter of 1-50 nm and are physically modified with an amphiphilic compound or chemically modified with a compound having a hydrophobic part and a group that can react with surface functions of the microfibrils.

Lu et al., "Surface modification of microfibrillated cellulose for epoxy composite applications", POLYMER, ELSEVIER SCIENCE PUBLISHERS B.V, GB, (20080119), vol. 49, no. 5, pages 1285 - 1296 discloses microfibrillated cellulose that possesses a 'web-like' morphology and was modified with three different coupling agents: 3-aminopropyltriethoxysilane, 3-glycidoxypropyltrimethoxysilane, and a titanate coupling agent. The MFC was incorporated into an epoxy resin system using acetone as the solvent.

WO 2005/056666 discloses polymeric compounds, including rubber particles, used for coating different surfaces in order to assure mechanical and anticorrosive protection. The rubber particles of the polymeric compounds comprise of vulcanized rubber particles treated with esters and activated with UV radiation.

In view of the above, it is one object of the present invention to provide a viscous composition, in particular a resin system, paste, adhesive, epoxy primer, gel coat, paint, composite molding, mastic composition or polymer mixture that minimizes or avoids the formation or presence of pores in the applied and hardened viscous composition. According to a preferred object, the use of commercially available air release additives in viscous compositions should be avoided and/or minimized.

### Summary of the Invention

This object (and others) is (are) solved by the use of microfibrillated cellulose as an air release agent in viscous compositions comprising at least one polymer capable of being hardened.

Therein, the microfibrillated cellulose is added to the viscous composition prior or during the hardening step.

This object / these objects is/are also solved by a viscous composition at least comprising (i) at least one polymer material capable of being hardened in at least one hardening step and (ii) at least one microfibrillated cellulose.

This object / these objects is/are addressed by an article comprising a substrate and a hardened viscous composition wherein said hardened viscous composition comprises (i) at least one polymer material that has been hardened in at least one hardening step and (ii) at least one microfibrillated cellulose.

Both, in regard to the viscous composition and the article, the area pore density at the surface of the hardened composition is less than 100 pores/cm², preferably less than 10 pores/cm², further preferably less than 1 pore/cm².

According to the present invention, a *"viscous composition"* is a composition that has a zero shear viscosity greater than at least ten times the viscosity of water, i.e. greater than 10 mPa·s, preferably greater than 100 mPa·s, further preferably greater than 500 mPa·s, further preferably greater than 1,000 mPa·s.

*"Zero shear viscosity"* is the viscosity measured at the limit of low shear rate, i.e. the viscosity a composition will ultimately attain when at rest and undisturbed. Flow curves are well-known and commonly used in the paint and coating industry. Unless indicated otherwise, whenever mentioned, the term "viscosity" refers to zero shear viscosities that are measured at standard conditions, in particular at room temperature and ambient pressure. Viscosities as measured very close to "zero shear" or upon approaching "zero shear" are also "zero shear viscosities" in the sense of the present invention.

Preferably, in regard to said article, said hardened composition is present as a film/layer or coating of at least 1 µm or at least 5 µm or at least 20 µm or at least 100 µm thickness and is present on a substrate. Further preferably, an inner and an outer surface exist, wherein the outer surface, i.e. the surface directed to the observer in the intended application, is used as the reference surface.

Examples of preferred viscous compositions are: resins, pastes, adhesives, gel coats, paints, composite moldings, mastic compositions, epoxy primers or polymer mixtures in general. The polymer mixtures preferably lead to thermoplastic or thermoset films or materials.

In accordance with the present invention, the viscous composition comprises no further thixotropic additive and/or no further shear thinning additive and/or no further air release agent other than microfibrillated cellulose. In accordance with this embodiment, the microfibrillated cellulose is used as the only air release agent and/or as the only thixotropic additive / shear thinning additive. Given the fact that the addition of a thixotropic and/or shear thinning additive usually has a negative impact on the porosity (i.e. increases the porosity), the synergetic effect of using MFC as air release agent and as thixotropic additive is particularly beneficial.

### Brief Description of the Figures

- Figure 1: shows the surface of a gel coat prepared in accordance with the present invention (using MFC as an air release agent). The average surface pore density is well below 1 pore/cm². The squares shown as a grid are 1 cm x 1 cm.
- Figure 2: shows the surface of the same gel coat as in Figure 1 with the one difference that it contains the conventional additive silica instead of microfibrillated cellulose. In this case, more than 300 pores/cm² were found (visible as whitish dots in the photograph).
- Figure 3: shows the surface of another reference sample (with silica as the thixotropic additive, no MFC) in a higher magnification (black and white side bars indicate 5 mm for each side). For this sample, 632 pores/cm² were counted on average.
- Figure 4: shows the surface of a gel coat sample prepared just like the sample of Figure 3, however, in this case MFC was used instead of Si. MFC is the only air release agent and the only thixotropic additive. Here, essentially no pores were found (0.1 pores/cm²).
- Figure 5: shows the same sample as shown in Figure 4 with the one difference that in addition to MFC, a conventional air release agent was added as well. Here, 0.07 pores/cm² were counted, i.e. the air release properties of MFC are not (negatively) affected by the addition of other air release agents. This shows the resilience of the gel coats according to the present invention towards surface active chemicals.

### Detailed Description of the Present Invention

*"Microfibrillated cellulose"* in the meaning of the present invention relates to cellulose fibers of various origin. In particular, microfibrillated cellulose (MFC) according to the present invention is cellulose that has been subjected to a mechanical treatment in order to increase their specific surface and to reduce their size in terms of cross-section and of length, wherein said size reduction leads to a fiber diameter in the nanometer range and a fiber length in the micrometer range.

The microfibrillated cellulose in accordance with the present invention may be unmodified in respect to its functional groups or may be physically modified or chemically modified or both.

Chemical modification of the surface of the cellulose microfibrils is preferably achieved by various possible reactions of the surface functional groups of the cellulose microfibrils and more particularly of the hydroxyl functional groups with a compound, preferably by: silylation reactions, etherification reactions, condensations with isocyanates, alkoxylation reactions with alkylene oxides, or condensation or substitution reactions with glycidyl derivatives.

The cellulose microfibrils can also be modified by a physical route, either by adsorption at the surface, or by spraying, or by coating, or by encapsulation of the microfibril. Preferred modified microfibrils can be obtained by physical adsorption of at least one compound. The MFC may also be modified by association with an amphiphilic compound (surfactant).

MFC may be present alone or together with derivatized MFC and/or derivatized cellulose, in particular cellulose ethers and/or cellulose esters.

Microfibrillated cellulose is described, among others in US 4 481 077, US 4 374 702 and US 4 341 807. According to US 4 374 702 ("Turbak"), microfibrillated cellulose has properties distinguishable from previously known celluloses. MFC in accordance with "Turbak" is produced by passing a liquid suspension of cellulose through a small diameter orifice in which the suspension is subjected to a large pressure drop and a high velocity shearing action followed by a high velocity decelerating impact, and repeating the passage of said suspension through the orifice until the cellulose suspension becomes a substantially stable suspension. The process converts the cellulose into microfibrillated cellulose without substantial chemical change of the cellulose starting material.

An improved process for obtaining particularly homogeneous MFC is described in WO 2007/091942.

The microfibrillated cellulose according to the present invention is preferably characterized in that the number weighted average fiber width i.e. diameter (as measured by AFM imaging) is in the range of 5 nm to 100 nm, preferably in the range of 10 nm to 60 nm, further preferably in the range of 20 nm to 30 nm. The nanometer-scale diameter is preferably achieved by means of the refining and homogenizing steps as discussed in more detail below leading to a particularly narrow and homogeneous distribution of the diameter of the microfibrillated fibers.

According to a preferred embodiment, the water retention value (WRV) of the microfibrillated cellulose according to the present invention as determined according to SCAN-C62:00 (ISO 23714:2007) is higher than 300%, preferably higher than 400%, more preferably higher than 500%. These high WRV are achieved, for example, by means of the process of manufacture as described below.

In principle, the raw material for the cellulose microfibrils may be any cellulosic material, in particular wood, annual plants, cotton, flax, straw, ramie, bagasse (from sugar cane), certain algae, jute, sugar beet, citrus fruits, waste from the food processing industry or energy crops or cellulose of bacterial origin or from animal origin, e.g. from tunicates.

In a preferred embodiment, wood-based materials are used as raw materials and the wood pulp used for microfibrillating has a comparatively high content of hemicelluloses to stabilize the MFC to prevent re-aggregation after defibrillation. Preferably, the hemicellulose content measured as the S18-value according to ISO 692:1982 is more than 3%, further preferably more than 4% (w/w).

The microfibrillated cellulose in accordance with the present invention may be produced according to any process known in the art. Preferably, said method comprises at least one mechanical pretreatment step and at least one homogenizing step. Said at least one pretreatment step preferably is or comprises a refining step.

Prior to the at least one mechanical pretreatment step, or in between at least two mechanical pretreatment steps, or as the mechanical pretreatment step, enzymatic (pre)treatment of the cellulose pulp is an optional additional step that may be preferred for some applications.

The purpose of the mechanical pretreatment step in accordance with the present process for manufacturing MFC is to "beat" the cellulose pulp in order to increase the accessibility of the cell walls, i.e. increase the surface area and therefore to increase the water retention value. Therefore, in a preferred embodiment of the present process, in the mechanical pretreatment, in particular at the refining stage, no or only limited microfibrillating takes place, i.e. while fibers are separated and free surface (with accessible OH-groups) is created, the dimensionality, in particular the length, of the fibers is not materially changed or is only reduced to about one half or less.

In the refiner that is preferably used in the mechanical pretreatment step, one or two rotating disk(s) is/are employed, i.e. the cellulose pulp slurry is subjected to shear forces.

In case an enzymatic (pre)treatment is performed, the enzyme is preferably added after at least one such refining step.

The purpose of the homogenizing step, which is preferably implemented after at least one mechanical pretreatment step, is to actually disintegrate the cellulose fibers into suspensions of microfibrils.

The so- microfibrillated cellulose preferably has a high aspect ratio, which corresponds to the ratio of the length of the microfibril bundle to its diameter (L/D). To this end, the pulp slurry is preferably passed through a homogenizer (a high-pressure homogenizer or a low-pressure homogenizer) and subjected to a pressure drop by forcing the pulp slurry between opposing surfaces, preferably orifices.

The term "orifice" means an opening or a nozzle or a valve contained in a homogenizer suitable for homogenizing cellulose.

In a preferred embodiment, the microfibrillated cellulose (MFC) as an ingredient for the viscous composition is subjected to at least one drying step prior to adding it to the other components of the viscous composition. The at least one drying step is preferably selected from freeze-, spray-, roller-drying; drying in a convection oven, flash drying or the like. However, never dried MFC may also be used as an air release additive in accordance with the present invention.

In one embodiment, the MFC is dried together with at least one additive. In accordance with a preferred embodiment of the present invention, said at least one additive is a surfactant or a derivatized cellulose, for example cellulose ethers or cellulose esters.

In one embodiment, surfactants are used as additives to be used during drying. Drying in the presence of a surfactant is believed to improve dispersion and hinder flocculation of the hydrophilic MFC in the (organic) solvent and to secure stability against sedimentation over time. Non-ionic surfactants are preferred.

In accordance with a preferred embodiment of the present invention, the ratio of surfactant to MFC is preferably not more than 3:1, preferably not more than 1:1, further preferably not more than 1:3, preferably not more than 1:7. The latter range is particularly advantageous for paints as viscous compositions.

According to one embodiment, freeze drying of MFC (with or without surfactants and/or additives) is performed in order to arrive at dried MFC.

In regard to the viscous composition, no restrictions exist in regard to the type of components or the number of components or the composition, as long as the composition fulfills the zero shear viscosity requirement listed above, i.e. has a zero shear viscosity of at least greater than 10 mPa·s.

A preferred viscous composition according to the present invention is a gel coat. Gel coats are coatings that are preferably based on epoxy or unsaturated polyester resin applied as a protective or decorative outer layer on a substrate, preferably on thermoset composite materials but also on thermoplastic materials. Gel coats are cured to form cross-linked polymers and are typically backed up with composite polymer matrices, often mixtures of polyester resin and fiber glass or epoxy resin with glass and/or carbon fibers. Gel coats are designed to be durable, providing resistance to ultraviolet degradation and to hydrolysis, in particular blistering in water. Gel coats like all viscous compositions according to the present invention preferably comprise at least one pigment that provides the finish color to the substrate.

Gel coats are typically used to coat composite bodies used in marine applications (boats) but also for car body parts, windmill parts or GUP/epoxy parts in general. Specialized gel coats can be used to manufacture the molds which in turn are used to manufacture components. These require very high levels of durability to overcome the mechanical and thermal stresses encountered during the curing and demolding processes.

Another preferred viscous composition according to the present invention is a coating or a paint composition. In accordance with the present invention, a preferred coating is a paint, varnish, lacquer or other finish used to create a protective and/or decorative layer on a substrate. Other coatings may be adhesives, primers or protective layers.

In accordance with the present invention, a paint is any liquid, liquifiable, or mastic composition which after application to a substrate in a thin layer is converted to an opaque or transparent solid film. The thickness of said film in the solid state is at least 1 µm or at least 5 µm or at least 20 µm or at least 100 µm.

Preferred thicknesses for primers are at least 2 µm to 5 µm. Preferred film thicknesses for paint coatings in decorative automotive applications are 20 µm to 40 µm. Preferred powder coatings have thicknesses of 50 µm to 100 µm. Preferred thicknesses for decorative paint coatings on walls (interior) are 100 µm to 500 µm.

One component of a coating or paint is the binder. The binder, or resin, is the actual film forming component of the paint or the coating. Preferably a binder is or comprises a polymer.

Preferably, a binder is a solid ingredient in a coating that holds the pigment or other (filler) particles in suspension and attaches them to the substrate. Preferably, a binder comprises resins (e.g., oils, alkyd, latex). An alkyd binder is a synthetic resin modified with oil. An alkyd coating is a coating that contains alkyd resins in the binder.

The binder preferably imparts adhesion, binds the pigments together, and influences such properties as gloss potential, exterior durability, flexibility and toughness. These are properties that are typically adversely affected by bubble or pore formation.

Binders can be categorized according to their respective drying or curing mechanism (i.e. hardening mechanism). Exemplary drying or curing mechanisms are solvent evaporation, oxidative crosslinking, catalyzed polymerization or coalescence. These drying and curing mechanisms and others are possible mechanisms for the hardening step in accordance with the present invention.

Binders include synthetic or natural resins such as acrylics, polyurethanes, polyesters, melamine resins, epoxy, or oils. Such binders may be used in any of the viscous compositions according to the present invention.

One example of a coating/paint is an emulsion (dispersion) coating/paint. An emulsion paint/coating preferably comprises resins that are suspended (dispersed) in water and flow together with the aid of an emulsifier.

One example of a coating/paint is latex paint. A latex paint is a water-based dispersion of sub-micrometer polymer particles. The term "latex" in the context of paint preferably means an aqueous dispersion; latex rubber (the sap of the rubber tree that has historically been called latex) is not necessarily an ingredient. These dispersions are prepared by emulsion polymerization. Latex paints cure by a process called coalescence where first the water, and then the trace, or coalescing, solvent, evaporate and draw together and soften the latex binder particles and fuse them together into irreversibly bound networked structures.

Paints that cure by oxidative crosslinking are preferably single package coatings for which, when applied, the exposure to oxygen in the air starts a process that crosslinks and polymerizes the binder component. Classic alkyd enamels fall into this category.

Paints that cure by catalyzed polymerization are generally two package coatings that polymerize by way of a chemical reaction initiated by mixing resin and hardener and which cure by forming a hard plastic structure. Depending on composition, they may need to dry first, by evaporation of solvent. Classic two package epoxies or polyurethanes fall into this category.

Still other films are formed by cooling of the binder, which is yet another way of hardening. For example, encaustic or wax paints are liquid when warm, and harden upon cooling. In many cases, they will resoften or liquify if reheated.

A preferred paint in accordance with the present invention is polymer paint, in particular a paint made of acrylic resin or vinyl resin, or a combination of both resins, in a liquid form with water as the base. Said composition spreads out in a layer and the water evaporates to leave a continuous, flexible, and waterproof film of plastic.

Acrylic paint is fast-drying paint containing pigment suspended in an acrylic polymer emulsion. Acrylic paints can be diluted with water, but become water-resistant when dry.

The application of a viscous composition, in particular paints, adhesives and gel coats, onto a substrate can be achieved, for example, by brushing or by spraying techniques. To ensure advantageous performance properties, in particular in regard to ease of application, but also in regard to long-term storage, curing and compatibility with the substrate, a thixotropic (shear and time-dependent) viscosity profile for the viscous composition is particularly desirable.

According to the art, fumed silica and/or thixotropic additives (such as modified glycols) are applied in viscous compositions to achieve a desired viscosity profile. Fumed silica and/or clay and/or other rheological additives are assumed to form a three-dimensional network of bonds between polar groups present in the viscous composition. These (weak) bonds are expected to be broken thus resulting in a reduced viscosity once shear forces act upon the viscous composition. The bonds are reestablished once the impact of shear forces stops thus restoring the high viscosity.

In the following description of preferred viscous compositions, unless explicitly indicated otherwise, percentage ranges given for components of the viscous composition are to be understood to mean percent weight relative to the overall weight of the composition. Also, unless indicated otherwise, the viscous composition is meant to be the composition that is ready to be hardened, i.e. a viscous composition prior to its intended application and, in particular, prior to curing/drying/cooling.

In case the viscous composition according to the present invention is a gel coat, said composition preferably comprises 10% by weight to 80% by weight of polymer capable of being hardened upon curing, cooling and/or drying. According to a preferred embodiment, the viscous composition comprises 20 to 70% by weight of said polymer.

In a preferred embodiment, the viscous composition is a gel coat composition that preferably comprises 10% by weight to 80% by weight of unsaturated polyester or epoxy, preferably unsaturated polyester. According to a preferred embodiment, the gel coat composition comprises 20 to 70% by weight of the unsaturated polyester or epoxy.

In case the viscous composition is a gel coat, it was found that comparatively small amounts of MFC of 0.3% to 2% by weight or 0.6% to 1.5% by weight or 0.8% to 1.3% by weight are sufficient to achieve the beneficial air release and thixotropic properties. In case the viscous composition is a gel coat, preferably, the amount of MFC used is lower than the amount of silica that would be used in the same composition to achieve the desired thixotropic effect, i.e. is lower than the typically employed 2% value for silica as known from the art.

In case the viscous composition according to the present invention is a paint or a coating or an adhesive, said composition preferably comprises 10% by weight to 99.9% by weight or 30% by weight to 99.9% by weight or 50% by weight to 98% by weight or 40% by weight to 70% by weight of polymer capable of being hardened.

The viscous composition according to the present invention comprises from 0.1% to 2 % by weight of microfibrillated cellulose.

According to a preferred embodiment, the viscous composition additionally comprises 1% to 50% by weight fillers and/or pigments, preferably 4% to 20% by weight fillers and/or pigments. In a preferred embodiment, the fillers make up 5% to 20%, while the pigments make up 15% to 25% of the total viscous composition. Viscous compositions without any filler and/or pigment are also included in the present invention.

Another component that may be present in the viscous composition is at least one organic solvent. In principle, any commonly known solvent can be used, for example acetone, styrene, methyl ethyl ketone, xylene or hexane. For water-borne coatings or paints, water or a water-compatible solvent is present instead of or in addition to the solvent. Protic solvents are preferred in this context.

The use of MFC as an air release agent is particularly preferred in viscous compositions that comprise pigments, in particular 1% or more, preferably 10% or more of pigments and/or fillers. This is because pores on the surface are particularly bothersome (since visible) for pigmented surfaces. Accordingly, viscous compositions are preferred that comprise 1% or more, preferably 10% or more of pigments and/or fillers. According to a preferred embodiment, the viscous composition comprises 1% to 30% of pigments, preferably 10% to 25% of pigments. However, transparent compositions comprising no fillers and/or pigments are also part of the present invention.

The viscous composition as described above is preferably applied to a substrate, for example by means of spraying or brushing. After application, the viscous composition is at least partially hardened. The final product of this process is an article that preferably comprises a substrate and a hardened film thereon. However, said article may also be entirely or primarily made out of the hardened viscous composition according to the present invention.

The hardened viscous composition comprises (i) at least one polymer material that has been hardened in a drying, cooling and/or curing step and (ii) at least one microfibrillated cellulose.

Therein, the area pore density at the surface of the hardened composition is less than 100 pores/cm², preferably less than 10 pores/cm², further preferably less than 1 pore/cm².

Preferably, said hardened composition is present as a film/layer of at least 1 µm or at least 5 µm or at least 20 µm or at least 100 µm thickness and is present on a substrate.

No restrictions exist in regard to the substrate. Preferred substrates are thermoset or thermoplastic bodies, molded bodies, composite substrates, shaped bodies or flat sheets. The substrate preferably comprises metal, plastics, wood or composites, in particular fiber reinforced composites, or combinations of these materials.

The article according to the present disclosure is preferably used in marine applications (boats, platforms, floating devices, windmills), transportation applications (car parts and bodies, truck parts and bodies), architectural applications where resistance to the environment is essential, decorative applications in general, both in household and industrial settings, weathering protection, abrasion protection and the like.

### Examples

One viscous composition according to the present invention is prepared by mixing resin (epoxy or unsaturated polyester resin) with 0.8% to 1.3% of the microfibrillated cellulose as described above. The microfibrillated cellulose is added by mixing it into the viscous resin. This exemplary viscous composition may be used as a gel coat.

The addition of the components occurs in the order polyester, MFC, filler, solvent, other additives, pigments.

Unless indicated otherwise, the percentages are meant to indicate weight percent per overall weight of the viscous composition.

By way of example, the following typical overall gel coat composition is in accordance with the present invention:

| | |
|---|---|
| Unsaturated polyester resin: | 55% (w/w) |
| MFC-product (dried, optionally modified): | 0.8% to 1.5% |
| Talcum: | 5% |
| Styrene: | 16% to 20% |
| Cobalt: | 0.3% |
| Inhibitor: | 0.05% |
| Accelerator: | 0.1% |
| Pigment-paste: | 15% to 25% |

Addition of MFC to the polyester is followed by mixing for 10 min at 1500 rpm to 2000 rpm. Talcum is then added and mixed until it is dispersed (ca. 10 min mixing time) followed by step-wise thinning with styrene for ca. 2 min to 5 min. Then the curing system and, as the last component, the pigment paste are added.

For the comparative examples given below, a reference gel coat corresponding to the silica based gel coats known from the art was prepared. In essence, the components are the same with the exception of using silica and a commercial available air release additive instead of MFC. The exemplary reference gel coat is specifically formulated as follows:

| | |
|---|---|
| Unsaturated polyester resin: | 55% (w/w) |
| Fumed silica: | 2% |
| Talcum: | 5% |
| PEG (polyethylenglycol): | 0.3% |
| Air release additive BYK-022 (silicone defoamer): | 0.5% |
| Styrene: | 16% to 20% |
| Cobalt: | 0.3% |
| Inhibitor: | 0.05% |
| Accelerator: | 0.1% |
| Pigment-paste: | 15% to 25% |

Silica is added to the polyester while mixing. Talcum is added in the same way. After adding PEG, the polyester thickens further, and is high shear mixed for approximately 5 minutes. The particle size of the aggregates is measured by a "grindometer". The aggregates in the gel coat after high shear mixing should be 30 µm to 70 µm; otherwise the surface will appear rough. Longer mixing-times give smaller aggregates. During mixing, the temperature should not exceed 45°C given the risk of gelling. Then the rest of the ingredients except air release additive, are mixed into the polyester. The air release additive is added after thinning of the gel coat to the right viscosity.

### Results and Test Procedures

Comparative tests and measurements were performed using a gel coat composition as the viscous composition in accordance with the present invention as described above and comparing the performance of this viscous composition with the performance of a silica based gel coat composition known from the art. All tests discussed in the following were performed under standard conditions, in particular at room temperature and ambient pressure.

Viscosity measurements of the viscous compositions as a function of time and/or shear (shear curves) were performed on a controlled stress Physica UDS 200 rheometer using a plate-and-plate geometry (50 mm).

The viscous compositions investigated here were shear thinning and thixotropic. In order to perform a fast and reproducible screening of these thixotropic properties, a shear method was developed. The method was developed by using the reference (silica based) gel coat. In this method, the shear rate was first increased from 0.1 s⁻¹ to 1,000 s⁻¹ and then directly decreased from 1,000 s⁻¹ to 0.1 s⁻¹. The method yielded reproducible results.

The time for the gel coat to start gelling (gel time) after adding curing agent was measured by the following procedure: 1.5% peroxide (methyl ethyl ketone peroxide 30% to 40%, active oxygen 9.1%) was added to the gel coat. The gel coat and the peroxide was mixed and put into a water-bath at 23°C. The time from mixing the gel coat to gelling around a rod was recorded as the gel-time.

The sagging properties of gel coats in the period between application and curing were tested by the following procedure: 1.5% peroxide (methyl ethyl ketone peroxide 30% to 40%, active oxygen 9.1%) was added to the gel coat. The gel coat and the peroxide was mixed and applied, forming 5 times 2 streaks of various thicknesses up to 1,000 µm. Immediately after application, the test panel was placed into a vertical position, with the thinnest film streak at the top, avoiding potential shock. Depending on the sagging tendency, the separate streaks converged. It is important to keep boundary conditions such as temperature and time from adding the curing agent to applying the coating constant.

As a measure of the surface quality, aggregation properties and gloss of the cured gel coat were evaluated by the following procedure: 1.5% peroxide (methyl ethyl ketone peroxide 30% to 40%, active oxygen 9.1%) was added to the gel coat. The gel coat and the peroxide were mixed and a film was applied with a film casting knife with 600 µm gap to an opacity chart (black and white). The chart was left in a horizontal position to cure. Covering ability, aggregates/lumps and gloss were evaluated.

In order to compare the application behavior, the gel coats were mixed with 1.5% peroxide and sprayed onto flat vertical fiber glass plates and/or onto horizontal glass plates using Applicator System AB IPG-8000 (Molnlycke, Sweden). The wet thicknesses of the sprayed layers were 500 µm to 1,500 µm. The spray properties and the leveling were studied during the spray test. In order to study sagging, gel coats were applied on glass plates using a draw-down applicator, giving a layer thickness of 500 µm. After drying, the gel coats were backup laminated in order to allow further testing.

The area pore density of the MFC- and Si-based hardened viscous compositions was determined as follows:

A grid of the overall size of 10 cm x 10 cm is drawn onto the surface of the hardened article, wherein said grid is a matrix of 10 x 10 adjacent cubes of a length of 1 cm, respectively. As a result, 100 adjacent areas of a size of 1 cm² are created. For each of the 100 squares, the number of pores visible on the surface of the hardened article (for example a film as applied onto a substrate) are counted inside the respective square. The pores are visible to the naked eyes as small "bubbles". For ease of identification, in a preferred embodiment, the number of pores/bubbles may be determined with the aid of an optical microscope having a magnification of 10x.

In case the contrast between the pores/bubbles and the hardened viscous composition is not deemed sufficient, the upper surface layer may be ground off. This grinding off of the surface layer, for example by grinding off 100 µm, 200 µm or the like, does not materially affect the number of bubbles discernible.

In either modus of inspection, the pores appear clearly as whitish spots in the (pigmented) surrounding hardened viscous material. The pores are counted for each of the 100 squares of the grid and the number of pores counted is averaged over the 100 squares resulting in an average number of pores per cm², referred to as "area pore density" throughout the present application.

As a result, more than 300 pores per cm² were found for each of the Si-based reference gel coats. The standard deviation in this case is approximately 20. By contrast, in the MFC-based gel coats prepared according to the present invention, the number of pores varies between 0 and 0.8 pores per cm² having a standard deviation of approximately 1.3. These results were obtained essentially irrespective of the thickness of the gel coat layer investigated and irrespective of whether the uppermost (shiny) surface coating was removed by grinding for better visual inspection or not.

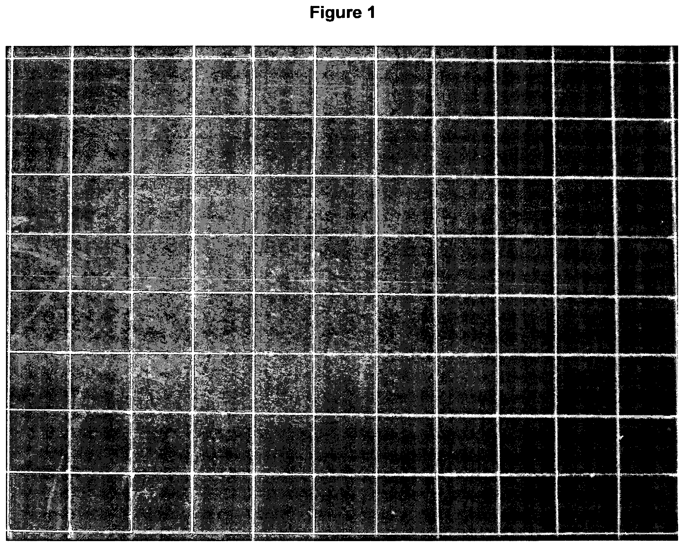

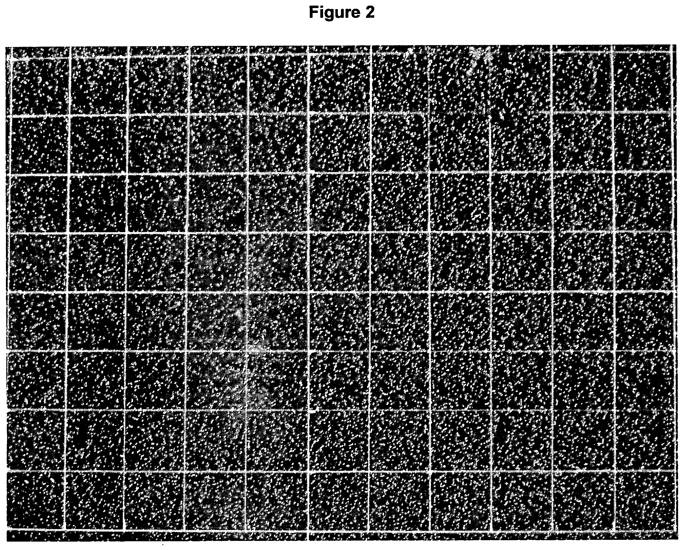

This drastic difference in surface quality can be seen in Figures 1 and 2.

In Figure 1, the above-described surface of gel coat prepared in accordance with the present invention (conventional air release agent is included, however no silica, and, most importantly, 1.2% w/w of microfibrillated cellulose) and having the reference grid is shown. As can be seen, the average number of pores per square (of 1 cm x 1 cm) is well below 1. In fact, practically no pores can be seen.

By contrast, in Figure 2, a gel coat is shown that has been prepared exactly the same manner with the same composition, except that no microfibrillated cellulose is present but fumed silica and an air release agent. In this case, the number of pores per square, on average, is well above 100 (in fact, using a convenient enlargement, more than 300 pores per square are counted on average).

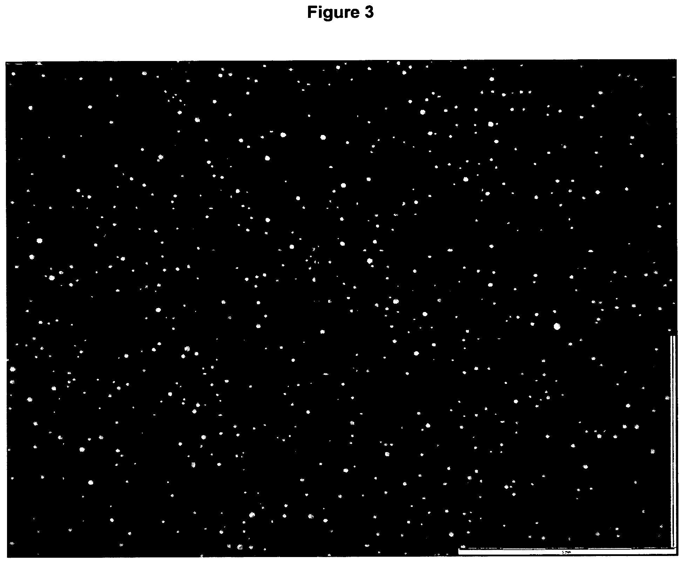

Figure 3 shows the surface of another reference sample (silica as thixotropic additive, no MFC) in a higher magnification (black and whide side bars indicate 5 mm for each side). Here, 632 pores/cm² were counted on average.

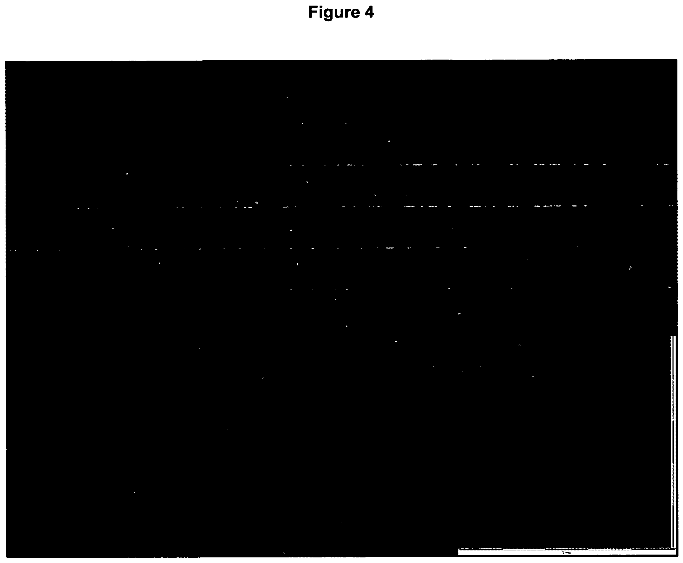

Figure 4 shows the surface of a gel coat sample prepared just like the sample of Figure 3, however, in this case MFC was used instead of Si. MFC is the only air release agent and the only thixotropic additive. Here, essentially no pores were found (0.1 pores/cm²).

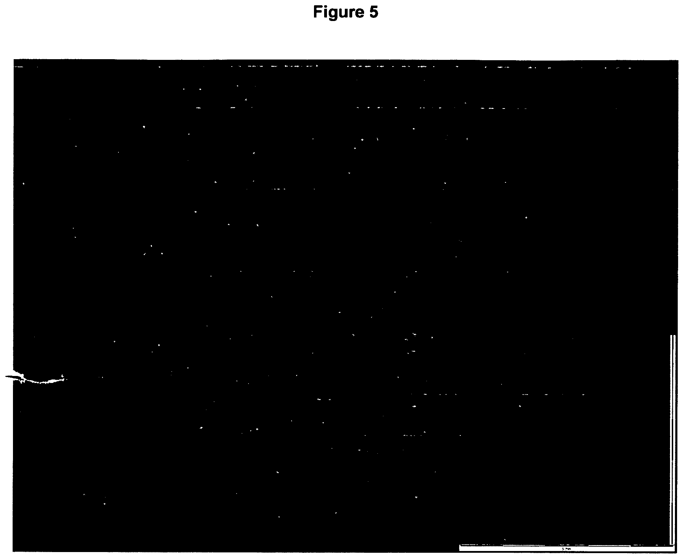

Figure 5 shows the same sample as shown in Figure 4 with the one difference that in addition to MFC a conventional air release agent was added as well. Here, 0.07 pores/cm² were counted, i.e. the air release properties of MFC are not (negatively) affected by the addition of other air release agents. This shows the resilience of the gel coats according to the present invention towards surface active chemicals.

The overwhelming effect according to the present invention, i.e. the almost complete avoidance of pore formation in a viscous composition that is hardened is essentially independent of the type of application of the viscous composition. However, for purposes of comparison, the viscous compositions to be compared in respect to their pore formation behavior are sprayed onto flat vertical fiber glass plates using the Applicator IPG-8000. The wet thickness of the sprayed layer should be adjusted to be approximately 800 µm. The spraying and the examination should be conducted under standard conditions, i.e. at room temperature and ambient pressure. The hardening/curing conditions that would be normally applied to the viscous material are to be obeyed for both the MFC-containing sample and the comparative sample. These are the conditions obeyed in the Examples given above and leading to the samples shown in the Figures.

Table 1 below summarizes the results obtained from the above-mentioned measurements and tests.

**Table 1**

| | **MFC-based gel coat (inventive)** | **Silica based gel coat (comparative)** |
|---|---|---|
| Cone-and-plate viscosity, 23°C (mPa·s) | > 300 | > 250 |
| Surface examination / area pore density (Figures 1 and 2) | No porosity (0.4 pores / cm²) | "crater"-formation on surface ∼300 pores / cm² |
| Figures 3 to 5 | No porosity (0.1 pores/cm²) | > 600 pores/cm² |

It is noted that the inventive gel coat has a higher Cone & Plate viscosity than the reference gel coat. The person skilled in the art would expect the number of pores (i.e. the area pore density) to rise since increased viscosity entraps more air. It is another testament to the superior air release properties of MFC that the area pore density is dramatically lowered contrary to this expectation.

In regard to the particularly important spray application properties, both gel coats were mixed with 1.5% peroxide and sprayed using the Applicator IPG-8000 until a wet film thickness of approximately 800 µm was reached on each side of the fiber glass (boat) mould. As an additional observation, the MFC-based gel coats were easier to spray than the reference silica-based gel coat, showing the superior rheological effect of MFC.

Most importantly and unexpectedly, on the cured laminate, no pores were observed for the MFC gel coat, whereas many pores were seen for the standard silica based gel coat (see "surface examination" in Table 1). In fact, it is believed that the present viscous composition comprising microfibrillated cellulose is not only the presently known gel coat with the lowest porosity but it was found that almost pore-free gel coats can now be achieved. This absence of pores throughout the coating layer was confirmed at various penetration depths of the applied hardened film by grinding of the laminated gel coat composites. By comparison, the reference (silica-based) sample shows a large number of pores at all levels of film depth investigated (see Figures).

The air release effect of MFC as shown for the above disclosed formulations of MFC based gel coat was also confirmed for several other recipes with various types of polymers and in a temperature span from 15°C to 23°C. A temperature decrease to 15°C increases the viscosity. Contrary to expectation, this increased viscosity did not lead to a noticeable increase in bubbles.

Furthermore, the use of the inventive MFC-based formulation results in gel coats with better spray ability than silica-based gel coats at similar or even significant higher viscosity levels.

Blistering tests (i.e. testing for resistance of the applied and cured gel coats to water exposure) were performed in a water bath at 50°C (total immersion). The results are shown in Table 2.

**Table 2**

| **Sample** | **Gel coat thickness** | **Occurrence of fiber-pattern** | **Occurrence of surface blisters** | **Occurrence of blistering** |
|---|---|---|---|---|
| | **µm** | **hours** | **hours** | **hours** |
| MFC-based gel coat | 500 | 1200 | 1200 | 2000 |
| Reference sample (silica based gel coat) | 500 | 800 | 800 | 1600 |

As can be seen from Table 2, the MFC-based gel coat was more resistant towards fiber-patterning, surface blisters and blistering than the Si-based reference coating. For the MFC-based gel coat, blistering occurred after 2,000 h in water at 50°C, whereas the standard held only for 1,600 h. These improved properties are believed to be the result of the significant reduction of porosity.

Overall, the advantages of the inventive MFC-based viscous composition (here: gel coat) vis-a-vis the reference (silica based; no MFC) viscous composition known from the art can be summarized as follows:
- no porosity of hardened MFC-based viscous compositions (i.e. better air release properties of MFC-based viscous compositions);
- hardened MFC-based viscous compositions are more resistant towards fiber-patterning, surface blisters and blistering (total immersion in water at 50°C);
- typically, a smaller amount of MFC as additive (in particular air release addition) needed than silica (0.8% to 1.3% MFC vs. 2% Si);
- handling properties in stock/manufacturing are improved (HES issues);
- MFC-based viscous compositions show thixotropic properties and stability comparable or better to/than silica, i.e. MFC also acts as a thixotropic additive / rheological modifier.

## Claims

1. Use of microfibrillated cellulose as an air release agent in a viscous composition, wherein said viscous composition comprises at least one polymer capable of being hardened in at least one hardening step, wherein the microfibrillated cellulose is added to the viscous composition prior to or during said at least one hardening step and wherein the viscous composition is a composition that has a zero shear viscosity greater than 10 mPa·s at room temperature.

2. Use according to claim 1, wherein the microfibrillated cellulose is also used as a shear thinning and/or thixotropic additive to the viscous composition.

3. Viscous composition at least comprising:
(i) at least one polymer material capable of being hardened in at least one hardening step and
(ii) at least one microfibrillated cellulose,
**characterized in that** the amount of the at least one microfibrillated cellulose is from 0.1% to 2% by weight, preferably 0.6 to 2% by weight, and particularly preferred 0.8 to 1.3% by weight, and
wherein the viscous composition comprises no further air release agent other than microfibrillated cellulose.

4. Use or viscous composition according to any one of the preceding claims, wherein the viscous composition is a composition having a zero shear viscosity greater than 100 mPa·s or greater than 1,000 mPa·s.

5. Use or viscous composition according to any one of the preceding claims, wherein the viscous composition further comprises at least one of the following: water, at least one water-compatible solvent, at least one pigment or filler, at least one primer, at least one curing agent.

6. Use or viscous composition according to any one of the preceding claims, wherein the viscous composition further comprises at least one of the following: at least one organic solvent, at least one pigment or filler, at least one curing agent.

7. Use or viscous composition according to any one of the preceding claims, wherein the viscous composition is a gel coat that comprises 10% by weight to 80% by weight of unsaturated polyester or epoxy, preferably an unsaturated polyester.

8. Use or viscous composition according to any one of the preceding claims, wherein the viscous composition is a paint or a coating or an adhesive that comprises 10% by weight to 99.9% by weight of a polymer capable of being hardened, preferably 30% to 99.9% by weight.

9. Use or viscous composition according to any one of the preceding claims, wherein the viscous composition comprises no further air release agent other than microfibrillated cellulose.

10. Use or viscous composition according to any one of the preceding claims wherein the viscous composition comprises no further shear thinning and/or thixotropic additive other than microfibrillated cellulose.

11. Use or viscous composition according to any one of the preceding claims, wherein the viscous composition is selected from the following group comprising: resins, epoxy primers, pastes, adhesives, gel coats, paints, composite moldings, mastic compositions, polymer mixtures.

## Patentansprüche

1. Verwendung von mikrofibrillierter Cellulose als Luftfreisetzungsmittel in einer viskosen Zusammensetzung, wobei die viskose Zusammensetzung mindestens ein Polymer umfasst, das in mindestens einem Härtungsschritt gehärtet werden kann, wobei die mikrofibrillierte Cellulose der viskosen Zusammensetzung vor oder während des mindestens einen Härtungsschritts zugesetzt wird, und wobei die viskose Zusammensetzung eine Zusammensetzung ist, die bei Raumtemperatur eine Null-Scherviskosität von mehr als 10 mPa·s aufweist.

2. Verwendung nach Anspruch 1, wobei die mikrofibrillierte Cellulose auch als scherverdünnendes und / oder thixotropes Additiv für die viskose Zusammensetzung verwendet wird.

3. Viskose Zusammensetzung, mindestens umfassend:
(i) mindestens ein Polymermaterial, das in mindestens einem Härtungsschritt gehärtet werden kann, und
(ii) mindestens eine mikrofibrillierte Cellulose,
**dadurch gekennzeichnet, dass** die Menge der mindestens einen mikrofibrillierten Cellulose 0,1 bis 2 Gew.-%, vorzugsweise 0,6 bis 2 Gew.-% und besonders bevorzugt 0,8 bis 1,3 Gew.-% beträgt und
wobei die viskose Zusammensetzung kein anderes Luftfreisetzungsmittel als die mikrofibrillierte Cellulose umfasst.

4. Verwendung oder viskose Zusammensetzung nach einem der vorhergehenden Ansprüche, wobei die viskose Zusammensetzung eine Zusammensetzung mit einer Null-Scherviskosität von mehr als 100 mPa·s oder mehr als 1.000 mPa·s ist.

5. Verwendung oder viskose Zusammensetzung nach einem der vorhergehenden Ansprüche, wobei die viskose Zusammensetzung ferner mindestens eines der folgenden umfasst: Wasser, mindestens ein wasserverträgliches Lösungsmittel, mindestens ein Pigment oder einen Füllstoff, mindestens einen Primer, mindestens ein Härtungsmittel.

6. Verwendung oder viskose Zusammensetzung nach einem der vorhergehenden Ansprüche, wobei die viskose Zusammensetzung ferner mindestens eines der folgenden umfasst: mindestens ein organisches Lösungsmittel, mindestens ein Pigment oder einen Füllstoff, mindestens ein Härtungsmittel.

7. Verwendung oder viskose Zusammensetzung nach einem der vorhergehenden Ansprüche, wobei die viskose Zusammensetzung eine Gelbeschichtung ist, die 10 Gew.-% bis 80 Gew.-% ungesättigten Polyester oder Epoxid, vorzugsweise einen ungesättigten Polyester, umfasst.

8. Verwendung oder viskose Zusammensetzung nach einem der vorhergehenden Ansprüche, wobei die viskose Zusammensetzung eine Farbe oder eine Beschichtung oder ein Klebstoff ist, die 10 Gew.-% bis 99,9 Gew.-% eines härtbaren Polymers umfasst, vorzugsweise 30 Gew.-% zu 99,9 Gew.-%.

9. Verwendung oder viskose Zusammensetzung nach einem der vorhergehenden Ansprüche, wobei die viskose Zusammensetzung kein anderes Luftfreisetzungsmittel als mikrofibrillierte Cellulose umfasst.

10. Verwendung oder viskose Zusammensetzung nach einem der vorhergehenden Ansprüche, wobei die viskose Zusammensetzung kein anderes scherverdünnendes und / oder thixotropes Additiv als mikrofibrillierte Cellulose umfasst.

11. Verwendung oder viskose Zusammensetzung nach einem der vorhergehenden Ansprüche, wobei die viskose Zusammensetzung ausgewählt ist aus der folgenden Gruppe umfassend: Harze, Epoxyprimer, Pasten, Klebstoffe, Gelcoats, Farben, Verbundformkörper, Mastixzusammensetzungen, Polymermischungen.

## Revendications

1. Utilisation d'une cellulose microfibrillée comme agent de libération d'air dans une composition visqueuse, dans laquelle ladite composition visqueuse comprend au moins un polymère pouvant être durci en au moins une étape de durcissement, dans laquelle la cellulose microfibrillée est ajoutée à la composition visqueuse avant ou pendant ladite au moins une étape de durcissement et dans laquelle la composition visqueuse est une composition qui a une viscosité à zéro cisaillement supérieure à 10 mPa·s à température ambiante.

2. Utilisation selon la revendication 1, dans laquelle la cellulose microfibrillée est aussi utilisée comme additif fluidifiant par cisaillement et/ou thixotrope dans la composition visqueuse.

3. Composition visqueuse comprenant au moins :
(i) au moins une matière polymère pouvant être durcie en au moins une étape de durcissement et
(ii) au moins une cellulose microfibrillée,
**caractérisée en ce que** la quantité d'au moins une cellulose microfibrillée est de 0,1 % à 2 % en poids, de préférence 0,6 à 2 % en poids, et de manière particulièrement préférée 0,8 à 1,3 % en poids, et
dans laquelle la composition visqueuse ne comprend pas d'autre agent de libération de l'air que la cellulose microfibrillée.

4. Utilisation ou composition visqueuse selon l'une quelconque des revendications précédentes, dans laquelle la composition visqueuse est une composition ayant une viscosité à zéro cisaillement supérieure à 100 mPa·s ou supérieure à 1 000 mPa·s.

5. Utilisation ou composition visqueuse selon l'une quelconque des revendications précédentes, dans laquelle la composition visqueuse comprend en outre au moins l'un des éléments suivants : de l'eau, au moins un solvant compatible avec l'eau, au moins un pigment ou une charge, au moins un agent d'apprêt, au moins un agent durcisseur.

6. Utilisation ou composition visqueuse selon l'une quelconque des revendications précédentes, dans laquelle la composition visqueuse comprend en outre au moins l'un des éléments suivants : au moins un solvant organique, au moins un pigment ou une charge, au moins un agent durcisseur.

7. Utilisation ou composition visqueuse selon l'une quelconque des revendications précédentes, dans laquelle la composition visqueuse est un revêtement en gel qui comprend 10 % en poids à 80 % en poids de polyester insaturé ou d'époxy, de préférence d'un polyester insaturé.

8. Utilisation ou composition visqueuse selon l'une quelconque des revendications précédentes, dans laquelle la composition visqueuse est une peinture ou un revêtement ou un adhésif qui comprend 10 % en poids à 99,9 % en poids d'un polymère pouvant être durci, de préférence 30 % à 99,9 % en poids.

9. Utilisation ou composition visqueuse selon l'une quelconque des revendications précédentes, dans laquelle la composition visqueuse ne comprend pas d'autre agent de libération de l'air que la cellulose microfibrillée.

10. Utilisation ou composition visqueuse selon l'une quelconque des revendications précédentes, dans laquelle la composition visqueuse ne comprend pas d'autre additif fluidifiant par cisaillement et/ou thixotrope que la cellulose microfibrillée.

11. Utilisation ou composition visqueuse selon l'une quelconque des revendications précédentes, dans laquelle la composition visqueuse est choisie dans le groupe suivant comprenant : des résines, des apprêts époxy, des pâtes, des adhésifs, des revêtements en gel, des peintures, des moulages composites, des compositions de mastic, des mélanges de polymère.
